# FASCICULE DE BREVET EUROPEEN

(11) **EP 0 346 318 B1**
(45) Date de publication et mention de la délivrance du brevet: **03.03.1993**
(21) Numéro de dépôt: 89870050.5
(22) Date de dépôt: 12.04.1989
(51) Int. Cl.: B66D 1/38, B66D 1/50, G01L 5/04, A01K 73/06

(54) **Dispositif de détection d'une force exercée sur un organe filiforme d'une charge**
Vorrichtung zur Feststellung einer auf ein fadenförmiges Teil einer Last ausgeübten Kraft
Device for the detection of a force applied to a filiform part of a load

(30) Priorité: 06.06.1988 BE 8800638
(43) Date de publication de la demande: 13.12.1989
(73) Titulaire: BRUSSELLE MARINE INDUSTRIES, B-8450 Nieuwpoort (BE)
(72) Inventeur: Ryckebusch Norbert, B-8450 Nieuwpoort (BE)
(74) Mandataire: Vanhamme, Joseph Louis

(56) Documents cités:
- DE-A- 2 451 547
- DE-A- 3 042 729
- DE-A- 3 146 522
- FR-A- 2 060 754
- FR-A- 2 184 017
- FR-A- 2 610 404
- US-A- 2 303 847
- US-A- 2 660 382

## Description

L'invention concerne un treuil avec dispositif de détection de la tension ou force exercée sur un organe de traction filiforme d'une charge, selon le préambule de la revendication principale.

Un tel dispositif de détection est décrit dans la demande de brevet européen N° 0 116 026. Dans ce dispositif, la force dans le câble est captée sur un rouleau placé d'un côté du câble tandis que deux autres rouleaux sont disposés de l'autre côté de celui-ci.

Ce dispositif a pour inconvénient que le câble, pendant son passage entre les rouleaux, est plié vers l'un et l'autre côté, ce qui provoque une usure rapide du câble. En plus, une usure de la gorge des rouleaux influence l'angle de contact du câble sur le rouleau de mesure et charge donc l'indication de la tension ou de la force sur le câble. Si l'usure des rouleaux est différente côté TB et BB, la comparison des forces TB et BB n'est plus sûre et le réglage de la fune, basé sur l'égalité de la tension dans les câbles, devient problématique.

Un dispositif de détection selon le préambule de la revendication principale est en outre décrit dans la demande de brevet français N° 2 610 404. Ce dispositif comprend trois rouleaux qui sont disposés du même côté du câble. Bien que ce dispositif réduise l'impact de l'usure des câbles sur les valeurs de mesure de la tension du câble, il présente l'inconvénient de nécessiter au moins trois rouleaux.

La présente invention a pour but de proposer un treuil qui est pourvu d'un dispositif de détection qui ne présente pas les inconvénients qui viennent d'être énoncés.

Pour atteindre ce but, le treuil avec dispositif de détection selon l'invention présente les caractéristiques qui sont énoncées dans la partie caractérisante de la revendication principale.

D'autres caractéristiques avantageuses de l'invention ressortent des revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
- la figure 1 est une vue latérale d'un dispositif de détection selon l'invention, associé à un treuil pourvu d'un guide-câble, de structure connue en soi;
La figure 2 est une vue de dessus en direction de la flèche II de la figure 1, le chariot du guide-câble n'étant pas représenté;
La figure 3 est une vue en direction de la flèche III de la figure 2; et
La figure 4 illustre de façon schématique le fonctionnement du dispositif de détection selon l'invention.

En se référant aux figures, on constate qu'un dispositif A, selon la présente invention, pour la détection de la tension ou force exercée sur un câble 1 auquel est fixé par exemple un filet de pêche et qui doit être enroulé sur un treuil B ou déroulé de celui-ci comprend essentiellement un premier rouleau 2 situé du côté de la charge et un deuxième rouleau 3 situé du côté du treuil. Le premier rouleau 2 est adapté pour former un rouleau de mesure et est monté librement rotatif autour d'un arbre de portée 4 qui est supporté à ses extrémités à deux points 30 et 31 de préférence fixes, par des capteurs de force 7 faisant partie de la structure fixe du treuil, par l'intermédiaire de dispositifs de support comprenant des ressorts plats 8, des boulons 9 et des fixations 10. Les dispositifs de support et les capteurs de force sont connus en soi.

Le deuxième rouleau 3, formant rouleau de guidage est fixé sur le chariot 14 au moyen d'un arbre 5 et de supports 6, d'un système de guide- câble connu en soi et décrit par exemple de façon détaillée dans le brevet belge No. 777453 et dans le brevet européen No. 0116026 du demandeur. Concernant la structure du système de guide-câble il convient alors de se reporter à ces documents. Les quelques symbole de référence du guide-câble sont ceux indiqués dans ces documents. En ce qui concerne la compréhension de la présente invention, il suffit de savoir que le chariot 14 se déplace parallèlement à l'axe du tambour indiqué en 32 du treuil B en étant entraîné par ce dernier à l'aide par exemple d'une chaîne représentée schématiquement en 11 sur les figures, en fonction de l'enroulement du câble 1 sur le tambour 32 en spires axialement juxtaposées ou du déroulement du câble de ce tambour.

Concernant les supports 6, ils sont montés fixes sur la surface supérieure du chariot 14 et sont réalisés, dans l'exemple de réalisation représenté, sous forme de plaques en équerre pourvues à leurs extrémités libres d'évidement 33 à travers lesquelles passe l'arbre 4 du rouleau de mesure 2 et qui permettent de garder la position de ce rouleau quand aucune charge est effectuée sur le câble 1. Par contre lorsque le câble est tendu, les supports 6 ne viennent pas en contact avec l'arbre 4 et le rouleau 2.

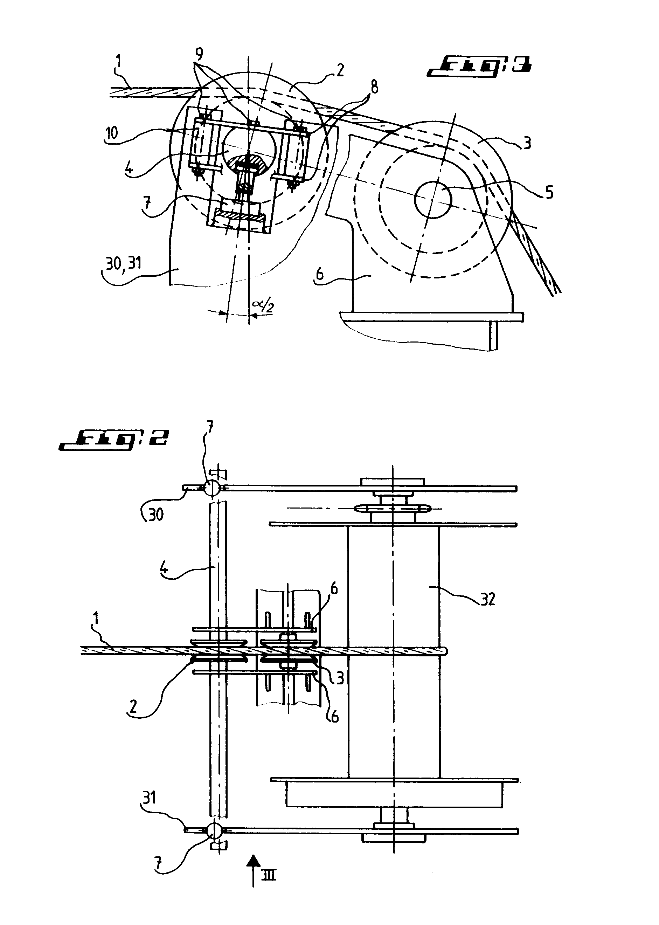

En se référant notamment à la figure 4, on décrira ci-après le fonctionnement du dispositif de détection selon l'invention.

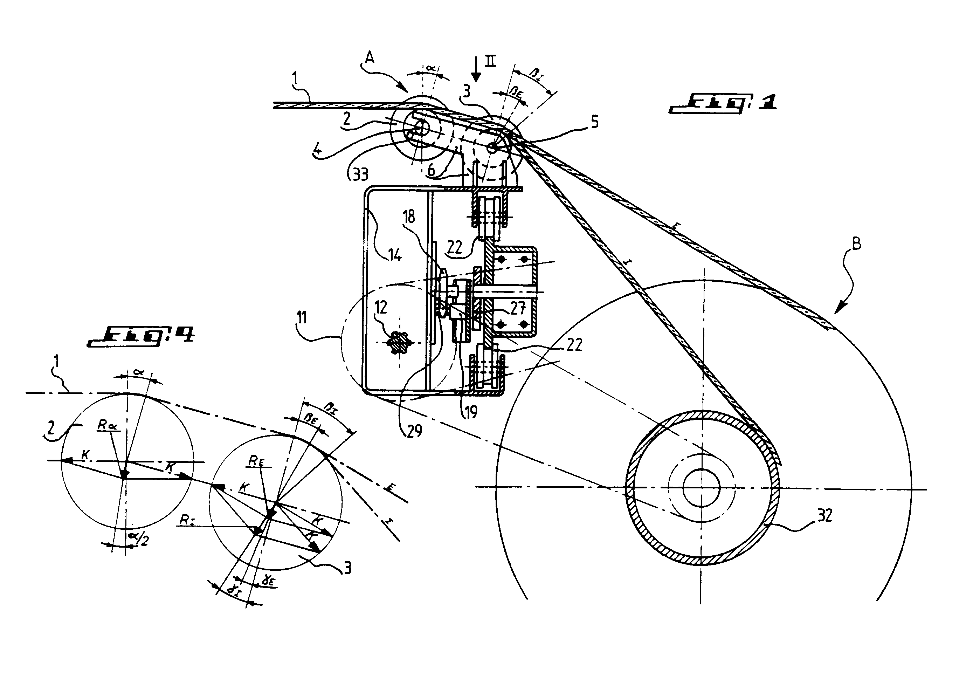

Comme cela est indiqué aux figures 1 et 4, la position du câble 1 sur le rouleau de guidage 3 varie avec le nombre de couches sur le tambour 32, et E et I représentant les positions extrêmes. La figure 4 montre la grandeur et la direction de la résultante des forces dans le câble 1 sur l'arbre 4 du rouleau de mesure 2 et sur l'arbre 5 du rouleau de guidage 3. L'angle de contact du câble 1 sur le rouleau de guidage 3 varie avec le nombre des couches sur le tambour entre les angles extrêmes β_{E} et β_{I}. On constate que la résultante R_{E} ou R_{I} des forces K dans le câble change en grandeur et en direction (angles γ_{E},γ_{I}), les valeurs extrêmes étant indiquées avec une tension constante K dans le câble. Etant donné que l'angle β change, l'arbre 5 ne convient donc pas pour la mesure de la force dans le câble. Par contre l'angle de contact α du câble sur le rouleau de mesure 2 ne change pas avec le nombre des couches sur le tambour 32, ni avec la position axiale du chariot 14, vue la grande distance entre le rouleau fixe sur l'arrière du bateau et le rouleau de mesure 2. L'usure des rouleaux 2 et 3 n'influence presque pas l'angle de contact et c'est seulement la différence d'usure entre les deux rouleaux qui provoque un changement de l'angle de contact. Ainsi la résultant Rα des forces dans le câble ne dépend pas de la position du chariot et du nombre de couches sur le tambour ni en grandeur ni en direction. Comme le rouleau de mesure 2 est guidé par le câble 1 tendu et la suspension 8, 9, 10 de l'arbre 4 du rouleau 2 ne peut pas donner des réactions dans la direction α/2 de la résultante Rα, les capteurs de force 7 mesurent seulement la résultante Rα des forces K dans le câble. Par une simple addition des signaux de chaque capteur 7 (par exemple une tension électrique) on dispose toujours de la grandeur exacte de la résultante Rα et donc, sur échelle, de la force K dans le câble. Etant donné que les capteurs 7 sont montés sur les supports 30 et 31 faisant partie du treuil, les liaisons électriques ou hydrauliques de transmission des valeurs de mesure sont fixes.

Il résulte de ce qui précédé que l'avantage technique primordial, propre à la présente invention, réside dans le fait que l'on réalise un système de mesure de la force dans le câble 1 pendant le guidage du câble sur le tambour 32 d'un treuil de pêche qui n'est pas influencé ni par la position du câble sur le tambour, ni par l'usure des rouleaux 2, 3 et caractérisé par la position fixe des capteurs de mesure, une usure minimale du câble 1, par sa position à un côté des rouleaux tout l'ensemble peut être incorporé dans le guide-câble du treuil.

Bien entendu de diverses modifications peuvent être apportées au dispositif de détection selon l'invention. Ainsi les moyens de mesure peuvent être de toute autre nature connue, à condition que les principes qui ressortent de la description du mode de réalisation de l'invention représenté soient respectés.

## Revendications

1. Treuil avec dispositif de détection (A) de la tension ou force exercée sur un organe de traction filiforme (1) d'une charge, notamment sur un câble de traction d'un filet de pêche, du type comprenant au moins deux rouleaux (2, 3) disposés en amont dudit treuil (B) et sur lequel l'organe de traction passe successivement, caractérisé en ce que les deux rouleaux (2, 3) sont disposés d'un même côté du câble (1), le premier rouleau (2) situé du côté de la charge est adapté pour mesurer la force tandis qu'un deuxième rouleau (3) situé du côté du treuil (B) est monté coaxial sur un arbre immobile (5) perpendiculairement à l'axe de cet arbre (5).

2. Treuil avec dispositif de détection (A) selon la revendication 1, caractérisé en ce que le rouleau de mesure (2) est monté sur un arbre (4) qui est supporté par deux capteurs de mesure (7) faisant avantageusement partie de la structure fixe du treuil.

3. Treuil avec dispositif de détection (A) selon l'une des revendications précédentes pour l'enroulement d'un câble sur un treuil pourvu d'un chariot de guide-câble permettant l'enroulement du câble selon une configuration à spires axialement juxtaposées, caractérisé en ce que le second rouleau (3) formant rouleau de guidage est disposé sur le chariot (14) tandis que le premier rouleau de mesure (2) est monté axialement mobile sur l'arbre (4) précité reposant sur des capteurs de mesure avantageusement fixes (7).

4. Treuil avec dispositif de détection (A) selon la revendication 3, caractérisé en ce que l'arbre de portée (4) du rouleau de mesure (2) passe à travers des moyens de guidage (33) axial du rouleau de mesure, qui sont solidaires du chariot (14).

## Patentansprüche

1. Winde mit einer Meßvorrichtung (A) zur Erfassung der Spannung oder ausgeübten Kraft auf ein belastetes, fadenförmiges Zugorgan, insbesondere auf ein Zugkabel eines Fischnetzes, welches mindestens zwei Rollen (2, 3) enthält, die oberhalb dieser Winde (B) angeordnet sind, und auf welchem das Zugorgan nacheinander vorbeigeht. Diese Vorrichtung ist dadurch gekennzeichnet, daß die zwei Rollen (2, 3) auf derselben Seite des Kabels (1) angeordnet sind. Die erste Rolle (2) befindet sich auf der Seite der Belastung und ermöglicht es die Kraft zu messen, während eine zweite Rolle (3), die sich auf der Seite der Winde (B) befindet, koaxial auf einem festen Tragarm (5) im rechten Winkel zur Achse dieses Tragarms (5) angebracht ist.

2. Winde mit einer Meßvorrichtung (A), gemäß Anspruch 1, gekennzeichnet dadurch, daß eine Meßrolle (2) auf einem Tragarm (4) montiert ist, welcher durch zwei Meßaufnehmer (7) gestützt wird, die vorteilhaft ein Bestandteil des festen Aufbaus der Winde sind.

3. Winde mit einer Meßvorrichtung (A), gemäß einem der vorhergehenden Ansprüche, zum Aufrollen eines Seiles auf einer Winde versehen mit einem Wagen zur Seilführung, welcher das Aufrollen des Seiles erlaubt, gemäß einer Konfiguration mit auf einer Achse nebeneinanderstehenden Windungen. Diese ist gekennzeichnet durch eine zweite Rolle (3), welche als Führungsrolle fungiert und auf dem Wagen (14) angebracht ist, während die erste Meßrolle (2) axial beweglich auf vorher genanntem Tragarm (4) angebracht ist und auf zwei Meßaufnehmern ruht, die vorteilhaft befestigt sind.

4. Winde mit einer Meßvorrichtung (A), gemäß Anspruch 3, gekennzeichnet dadurch, daß der Tragarm (4) der Meßrolle (2) durch axiale Führungen (33) der Meßrolle, die mit dem Wagen (14) verbunden sind, hindurchgeht.

## Claims

1. Winch with detection device (A) of the tension force applied to a wire-shaped traction element (1) of a charge and namely on a traction rope of a fishing net of the type comprising at least two rolls (2,3) located upstream said winch (B) and whereon the traction element runs successively,characterized by the fact that both rolls (2,3) are located on the same side of rope (1) and that the first roll (2) located on the charge side is designed to measure the force while a second roll (3) located on the winch (B) side is coaxially supported by a motionless shaft (5).

2. Winch with detection device (A) according to claim 1, characterized by the fact that the measuring roll (2) is mounted on a shaft (4) which is supported by two measuring sensors (7) which are advantageously part of the stationary structure of the winch.

3. Winch with detection device (A) according to claim 1 one of the preceding claims for winding up a rope on a winch equipped with a rope guiding trolley achieving rope winding up according to a pattern with turns axially located near each other.,characterized by the fact that the second roll (3) acting as guiding roll is located on the trolley (14) while the first measuring roll (2) is mounted axially movable on said shaft (4) which is supported by advantageously stationary sensors (7).

4. Winch with detection device (A) according to claim 3 characterized by the fact that the supporting shaft (4) of the measuring roll (2) runs through the axial guiding means (33) of the measuring roll,which are fastened to the trolley (14).
